Europäisches Patentamt

European Patent Office

Office européen des brevets

(11) Numéro de publication: **0 268 210 B1**

## FASCICULE DE BREVET EUROPEEN

(45) Date de publication de fascicule du brevet: **11.03.92**

(51) Int. Cl.⁵: **H02G  15/14**, G02B 6/44, F16C 11/00

(21) Numéro de dépôt: **87116716.9**

(22) Date de dépôt: **12.11.87**

(54) **Tête articulée de câble pour liaisons sous-marines.**

(30) Priorité: **14.11.86 FR 8615875**

(43) Date de publication de la demande:
**25.05.88 Bulletin  88/21**

(45) Mention de la délivrance du brevet:
**11.03.92 Bulletin  92/11**

(84) Etats contractants désignés:
**BE CH DE ES FR GB IT LI NL**

(56) Documents cités:
**EP-A- 0 122 033**
**FR-A- 2 163 388**

(73) Titulaire: **ALCATEL CABLE**
**30, rue des Chasses**
**F-92111 Clichy Cédex(FR)**

(72) Inventeur: **Gouverneur, Jean-Pierre**
**68, rue Duguay-Trouin**
**F-62100 Calais(FR)**

(74) Mandataire: **Weinmiller, Jürgen et al**
**Lennéstrasse 9 Postfach 24**
**W-8133 Feldafing(DE)**

# Description

La présente invention est relative aux jonctions mécaniques entre câble de ligne et boîtiers d'équipements dans une liaison sous-marine et plus particulièrement à celles qui comportent un joint de Cardan pour éviter au câble de ligne les efforts de flexion en sortie des boîtiers d'équipements et qui sont connues sous la dénomination de tête articulée de câble.

Ces têtes articulées de câble illustrées notamment dans le brevet francais n ° 2.163.388 se composent essentiellement d'un support de Cardan fixé à une extrémité d'un boîtier d'équipement, d'une tête de Cardan prolongée par un bras oscillant fixé à une pièce d'arrêt renfermant une pièce d'ancrage attachée à une extrémité du câble de ligne et d'une bague de Cardan articulée à la fois au support et à la tête de Cardan. Ces différentes pièces qui réclament de hautes qualités mécaniques, comme d'ailleurs les boîtiers d'équipements, sont réalisées, en un alliage spécial de cuprobéryllium choisi pour son exellente tenue à l'eau de mer.

Cet alliage est cher car il a peu d'utilisation. Aussi on a déjà cherché à l'éliminer des boîtiers en réalisant ceux-ci, comme le montre le brevet précité, à l'aide d'un caisson en acier, placé dans une carcasse tubulaire fixée aux têtes articulées de câble. Le caisson en acier résiste à la pression du milieu ambiant ; il est étanche, très rigide et revêtu d'une gaine de polyéthylène le protégeant de l'eau de mer. La carcasse tubulaire réalisée en stratifié de verre-époxyde, résiste aux efforts de traction exercés sur le câble de ligne ; elle est constituée d'un cylindre fermé par deux hémisphères creux présentant à leur sommet une ouverture circulaire dans le pourtour de laquelle se fixe la base d'un support de Cardan d'une tête articulée.

Ce support de Cardan reste, comme les principales pièces de la tête articulée, bague de Cardan, tête de Cardan et pièce d'arrêt, en alliage de cuprobéryllium.

La présente invention a pour but une tête articulée d'un moindre coût, permettant en outre une simplification de la carcasse d'un boîtier d'équipements.

Elle a pour objet une tête articulée de câble comportant un joint de Cardan avec un support et une bague de Cardan réalisés en stratifié fibrerésine obtenu par enroulement filamentaire.

Avantageusement, la tête articulée comporte une pièce d'arrêt qui est solidaire de la tête de Cardan et renferme une pièce d'ancrage attachée à une extrémité de câble de ligne, et qui est ellemême réalisée en un stratifié fibre-résine obtenu par enroulement filamentaire.

Selon une autre caractéristique, le support de Cardan a la forme d'un manchon qui se fixe directement sur la partie cylindrique d'un boîtier d'équipements.

Les caractéristiques et avantages de l'invention ressortiront de la description ci-après d'un mode de réalisation donné à titre d'exemple.

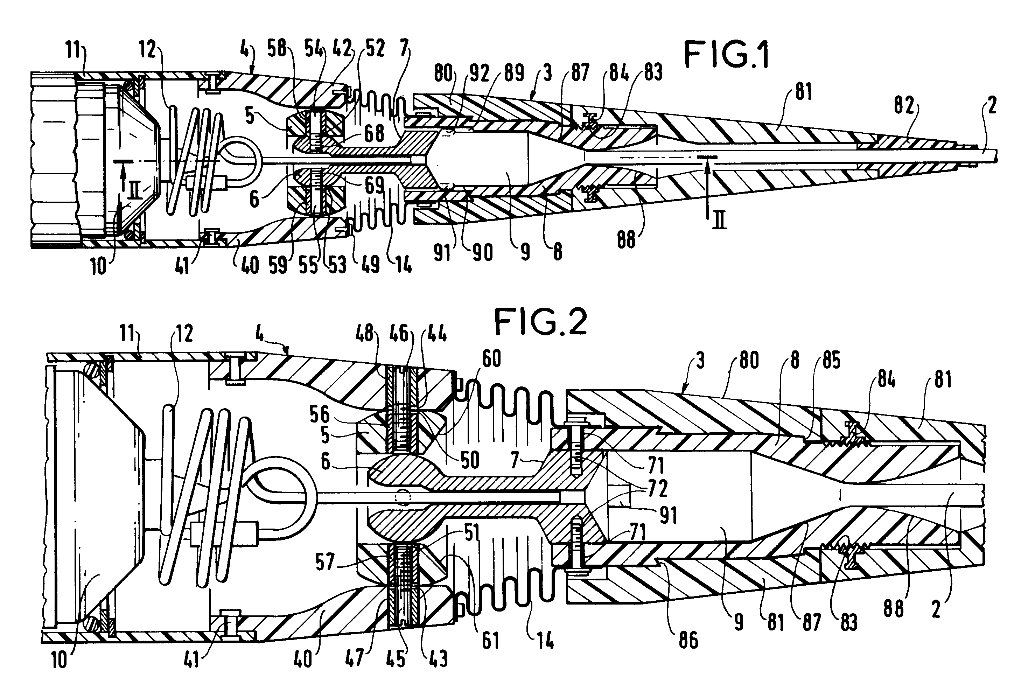

Cette description sera faite en regard du dessin dont les figures 1 et 2 montrent deux coupes longitudinales, selon des plans orthogonaux, d'une tête articulée de câble fixée à l'extrémité d'un boîtier de répéteur sous-marin vu partiellement coupé.

Un répéteur sous-marin a la forme générale d'un fût cylindrique prolongé à ses deux extrémités par des têtes articulées de câble qui le raccordent avec un câble de ligne. Dans les figures, le fût cylindrique est partiellement visible et comporte un caisson métallique 10 placé dans une carcasse tubulaire 11.

La caisson métallique 10 renferme les équipements du répéteur et les protège contre la pression du milieu ambiant. Il est en acier, étanche, très rigide et revêtu d'une gaîne de polyéthylène qui l'isole de l'eau de mer.

Il est équipé, de chaque côté, d'une amorce de câble 12 accèdant à ses équipements internes et les reliant au câble de ligne 2 en passant au travers d'une tête articulée 3.

La carcasse tubulaire 11 formée d'un cylindre en stratifié verre-époxyde est très résistante à la traction et assure la liaison mécanique entre les têtes articulées de câble.

La tête articulée 3 comporte un support de Cardan 4 fixé à une extrémité de la carcasse 11. Celui-ci est réalisé en stratifié verre-résine époxyde à partir d'un fuseau de fils de verre bobinés en fils croisés. Il a la forme d'un manchon légèrement conique dont l'épaisseur de paroi est supérieure à celle de la carcasse 11 et va croissante depuis son extrémité de plus grand diamètre 40 emboîtée et fixée à l'extrémité de la carcasse 11 par un ensemble de vis 41 et d'écrous moletés, emboîtés et collés en alliage de cuprobérylium, jusqu'à son extrémité de plus petit diamètre 42 logeant une bague de Cardan 5. L'alésage du support de Cardan 4 est pourvu, à son extrémité de plus petit diamètre 42 de deux plats parallèles diamétralement opposés percés de deux trous d'articulation 43, 44 qui se font face et servent de portée à deux demi-axes 45, 46 en alliage de cuprobéryllium autour desquels pivote la bague de Cardan 5. Ces trous d'articulation 43 et 44 sont chemisés de canons de guidage 47, 48 collés, en alliage de cuprobéryllium, permettant de répartir dans le stratifié les efforts exercés par les demi-axes 45, 46 et d'éviter un cisaillement entre couches filamentaires.

La bague 5 de Cardan est aussi réalisée en stratifié verre-époxyde à partir d'un fuseau de fils de verre bobinés en fils croisés. Elle a une épaisseur sensiblement égale à celle de la paroi extérieure de l'extrémité de plus petit diamètre 42 du support de Cardan 4 qui lui sert de logement. Son extérieur est sphérique et présente deux plats parallèles extérieurs diamétralement opposés percés de deux trous d'articulation 50 et 51 qui se font face et servent de portée aux demi-axes 45, 46 la rattachant au support de Cardan 4. Son alésage cylindrique présente deux plats parallèles intérieurs diamétralement opposés réalisés à 90° des plats extérieurs et percés de deux trous d'articulations 52, 53 qui se font face et servent de portée à deux demi-axes 54, 55 en alliage de cuprobéryllium autour desquels pivote une tête de Cardan 6 prolongée d'un bras oscillant 7. Les quatre trous d'articulation 50, 51, 52, 53 sont chemisés, comme ceux 43, 44 du support de Cardan 4, par des canons de guidage 56, 57, 58, 59 en alliage du cuprobéryllium répartissant les efforts dans le stratifié. Les canons 56 et 57 sont filetés, permettant ainsi de visser les demi-axes et de rattacher la bague 5 au support de cardan 4. Deux sillons 60, 61 sont fraisés latéralement dans la bague de Cardan 5 aux limites du débattement du bras oscillant 7 afin d'ouvrir l'angle de pivotement du bras oscillant 7 par rapport à la bague de Cardan 5 et de faire en sorte que le débattement du bras oscillant 7 ne soit limité, dans toutes les directions, que par l'ouverture circulaire du support de Cardan 4.

La tête de Cardan 6 de forme sphérique est logée dans l'alésage de la bague de Cardan 5. Elle présente deux plats parallèles et diamétralement opposés percés de deux trous d'articulation filetés 68, 69 qui se font face et dans lesquels se vissent les demi-axes 54, 55 qui la rattachent à la bague de Cardan 5. Elle est réalisée, avec le bras oscillant 7, d'une seule pièce en alliage de cuprobéryllium et percée comme ce dernier d'un canal axial dans lequel l'amorce de câble 12 pénètre après avoir acquis de la souplesse en effectuant au préalable un trajet en tire-bouchon.

Le bras oscillant 7 est recouvert d'un soufflet 14 fixé d'une part à la périphérie du support de Cardan 4 par un ensemble de vis 49 et d'autre part à l'extrémité du bras ocillant 7 opposée à la tête de Cardan 4 par des vis 71 se vissant dans des trous latéraux filetés 72 et assemblant en outre cette dernière extrémité du bras oscillant 7 avec une pièce d'arrêt tubulaire 8 qui s'emboîte sur elle.

La pièce d'arrêt tubulaire 8 est réalisée en stratifié verre-résine époxyde à partir d'un fuseau de fils de verre bobinés en fils croisés sur un mandrin provisoire aux dimensions de sa cavité centrale. Son profil extérieur, en forme d'une succession de cylindres dont les diamètres décroissent en s'éloignant du boîtier de répéteur sert de support à un manchon de caoutchouc en trois parties 80, 81, 82 assurant la transition progressive de diamètre entre la carcasse 11 du boîtier de répéteur et le câble de ligne 2 et comporte un filetage 83 permettant l'accrochage de la partie médiane 81 du manchon de caoutchouc qui est pourvue d'une bague filetée 84 en alliage de cuprobéryllium noyée dans le caoutchouc. La partie avant 80 du manchon de caoutchouc placée du côté du boîtier de répéteur épouse la forme extérieure de la pièce d'arrêt 8 et se bloque sur les épaulements 85, 86 séparant les surfaces cylindriques extérieures de diamètres différents de la pièce d'arrêt 8. Elle peut être remplacée en cas de pièce d'arrêt 8 plus longue. La partie arrière 82 du manchon de caoutchouc se fixe à la partie médiane 81 par emboîtage et peut être remplacée en cas de câbles de ligne à diamètres différents.

La cavité de la pièce d'arrêt 8 commence, du côté du bras oscillant 7 par une partie cylindrique ayant dans sa paroi deux logements diamètralement opposés 89, 90 pour des butées antirotation 91, 92 en relief sur la paroi latérale d'une pièce d'ancrage 9 et se termine, du côté opposé au bras oscillant, par une partie conique rétrécie suivant le profil d'un col d'entonnoir 87 à bec évasé 88.

Elle sert de logement à la pièce d'ancrage 9 de profil complémentaire qui est attachée au câble de ligne 2 pénétrant à l'intérieur de la pièce d'arrêt 8 par sa partie 88 en forme de bec évasé. Cette pièce d'ancrage 9 s'appuie en butée sur la partie conique rétrécie 82 en forme de col d'entonnoir de la pièce d'arrêt 8 et est bloquée en rotation par rapport à la pièce d'arrêt 8 au moyen des butées antirotation 91, 92 en relief sur sa paroi latérale. Elle est formée d'une boîte métallique étanche, très rigide dans laquelle l'amorce de câble 12 est raccordée au câble de ligne 2. Cette boîte réalisée en acier est revêtue d'une gaîne en polyéthylène qui l'isole de l'eau de mer et attachée au toron-porteur du câble de ligne 2, de la manière habituelle, au moyen d'une bague conique épanouissant ce toron dans une entrée conique.

La tête articulée de câble qui vient d'être décrite outre son coût de revient moindre dû à l'utilisation de pièces en stratifié apporte une simplification de la carcasse du boîtier d'équipement en supprimant les pièces hémisphériques.

## Revendications

1. Tête articulée de câble (3) pour liaisons sous-marines comportant un joint de Cardan, caractérisée en ce que le support (4) et la bague (5) de Cardan sont réalisés en stratifié fibre-résine époxyde par enroulement filamentaire.

2. Tête articulée (3) selon la revendication 1, caractérisée en ce qu'elle comporte en outre une pièce d'arrêt (8) qui est fixée à la tête (6) de Cardan et renferme une cavité servant de logement à une pièce d'ancrage (9) attachée à l'extrémité d'un câble de ligne (2), et qui est réalisée en stratifié fibre-résine époxyde par enroulement filamentaire.

3. Tête articulée (3) selon la revendication 1, caractérisée en ce que le support (4) de Cardan a la forme d'un manchon dont une extrémité (42) à paroi plus épaisse sert de logement à la bague (5) de Cardan et de portée à l'articulation autour de laquelle pivote cette dernière, et dont l'autre extrémité (40) à paroi moins épaisse se fixe directement à la partie cylindrique (11) d'un boîtier d'équipements.

4. Tête articulée (3) selon la revendication 1, caractérisée en ce que les portées des articulations de Cardan dans le support (4) et la bague (5) de Cardan sont constituées de trous (43, 44, 50, 51, 52, 53) percés dans les stratifiés et chemisés de canons métalliques (47, 48, 56, 57, 58, 59) en alliag e de cuprobéryllium permettant de répartir les efforts exercés par les axes dans les stratifiés et d'éviter les cisaillements entre les couches filamentaires.

5. Tête articulée (3) selon la revendication 1, comportant une tête de Cardan (6) prolongée par un bras oscillant (7), caractérisée en ce que la bague de Cardan (5) comporte deux sillons (60, 61) fraisés latéralement aux limites de débattement du bras oscillant (7) afin d'ouvrir l'angle de pivotement dudit bras oscillant (7) par rapport à la bague de Cardan (5) et de ne limiter son débattement que par l'ouverture du support de Cardan (4).

6. Tête articulée (3) selon la revendication 1, caractérisée en ce qu'elle comporte en outre une pièce d'arrêt (8) qui est fixée à la tête de Cardan (6), renferme une cavité servant de logement à une pièce d'ancrage (9) attachée à un câble de ligne (2) et comporte dans la paroi intérieure de cette cavité au moins un logement (89, 90) pour une butée antirotation (91, 92) en relief sur la pièce d'ancrage (9).

7. Tête articulée (3) selon la revendication 1, caractérisée en ce qu'elle comporte en outre une pièce d'arrêt (8) fixée à la tête de Cardan (6) ayant un profil extérieur en forme d'une succession de cylindres de diamètres décroissants en direction du câble de ligne (2) servant de support à un manchon de caoutchouc en trois parties (80, 81, 82) assurant une transition progressive de diamètre.

8. Tête articulée (3) selon la revendication 7, caractérisée en ce que la pièce d'arrêt est pourvue extérieurement d'un filetage (83) permettant l'accrochage de la partie médiane (81) du manchon de caoutchouc elle-même pourvue d'une bague métallique filetée (84) noyée dans le caoutchouc.

9. Tête articulée (3) selon la revendication 8, caractérisée en ce que les parties extrêmes (80, 82) du manchon de caoutchouc sont fixées l'une (80) par blocage au moyen de la partie médiane (81) contre des épaulements (85, 86) de la paroi externe de la pièce d'arrêt (8) et l'autre (82) par emboîtage dans la partie médiane (81).

10. Tête articulée (3) selon la revendication 2, caractérisée en ce que la dite cavité comporte une partie cylindrique qui débouche du côté de la tête de Cardan (6) et est emboîtée et vissée sur l'extrémité d'un bras oscillant (7) prolongeant la tête de Cardan (6) et qui se termine du côté opposé à la tête de Cardan (6), par une partie conique rétrécie suivant le profil d'un col d'entonnoir (87) à bec évasé (88).

**Claims**

1. An articulated cable head (3) for submarine links comprising a universal joint, characterized in that the support (4) and the ring (5) of the universal joint are made of a fiber and epoxy laminate by winding threads.

2. An articulated head (3) according to claim 1, characterized in that it further includes a stop part (8) which is fixed to the universal joint head (6) and which includes a cavity serving as a housing for an anchor part (9) which is attached to the end of the line cable (2), said stop part being made of fiber and epoxy resin laminate by winding threads.

3. An articulated head (3) according to claim 1, characterized in that the universal joint support (4) is in the form of a sleeve having one end (42) with a thicker wall serving as a housing for the universal joint ring (5) and serving as a hinge bearing surface about which said ring pivots, and whose other end (40) of thinner wall thickness is fixed directly to the cylindrical portion (11) of an equipment housing.

4. An articulated head (3) according to claim 1, characterized in that the universal joint hinge bearing surfaces in the support (4) and the ring (5) of the universal joint are constituted by holes (43, 44, 50, 51, 52, 53) drilled in the laminates and lined with metal bushings (47, 48, 56, 57, 58, 59) of cuproberyllium alloy for distributing the forces exerted by the axles in the laminates and avoiding shear between the layers of fibers.

5. An articulated head (3) according to claim 1, including a universal joint head (6) extended by an oscillating arm (7) and characterized in that the universal joint ring (5) includes two notches (60, 61) milled laterally to the rocking limits of the oscillating arm (7) in order to open up the pivot angle of said oscillating arm (7) relative to the universal joint ring (5) so that its stroke is limited solely by the opening of the universal joint support (4).

6. An articulated head (3) according to claim 1, characterized in that it further includes a stop part (8) which is fixed to the universal joint head (6) which has a cavity acting as a housing for an anchor part (9) attached to a line cable (2) and which includes at least one recess (89, 90) in the inside wall of said cavity to receive an anti-rotation spline (91, 92) projecting from the surface of the anchor part (9).

7. An articulated head (3) according to claim 1, characterized in that it further includes a stop part (8) fixed to the universal joint head (6) having an outside profile in the form of a succession of cylinders of decreasing diameter going towards the line cable (2) and serving as a support for a three-part rubber sleeve (80, 81, 82) providing a progressive diameter transition.

8. An articulated head (3) according to claim 7, characterized in that the stop part is provided on the outside with a thread (83) for fixing the mid-portion (81) of the rubber sleeve which is itself provided with a threaded metal ring (84) embedded in the rubber.

9. An articulated head (3) according to claim 8, characterized in that the end portions (80, 82) of the rubber sleeve are fixed as follows: one of them (80) is locked by means of the mid-portion (81) against shoulders (85, 86) of the outside wall of the stop part (8); and the other of them (82) is fixed by inter-fitting with the mid-portion (81).

10. An articulated head (3) according to claim 2, characterized in that said cavity includes a cylindrical portion which opens out towards the universal joint head (6) and is engaged over and screwed to the end of an oscillating arm (7) extending the universal joint head (6), and which is terminated at its end furthest from the head (6) by a funnel shaped tapering conical portion (87) leading to a flared outlet (88).

**Patentansprüche**

1. Gelenkiger Kabelkopf (3) für Unterwasserverbindungen mit einer Cardanverbindung, dadurch gekennzeichnet, daß die Cardanträger (4) und der Cardanring (5) aus Faser-Epoxid-Harz-Schichtstoff mit aufgerollten Fasern hergestellt sind.

2. Gelenkkopf (3) nach Anspruch 1, dadurch gekennzeichnet, daß er weiter ein Blockierteil (8) aufweist, das am Cardankopf (6) befestigt ist und einem Raum umschließt, der ein Ankerteil (9) aufnimmt, das am Ende eines Leitungskabels (2) befestigt ist und das aus Faser-Epoxid-Harz-Schichtstoff mit aufgerollten Fasern ist.

3. Gelenkkopf (3) nach Anspruch 1, dadurch gekennzeichnet, daß der Cardan-Träger (4) die Form einer Muffe hat, von der ein Ende (42) mit dickerer Wand den Cardanring (5) aufnimmt und als Auflager für das Gelenk dient, um das dieser letztere schwenkt, während das andere Ende (40) der Muffe mit weniger dicker Wand direkt an dem zylindrischen Teil (11) eines Ausrüstungsgehäuses befestigt ist.

4. Gelenkkopf (3) nach Anspruch 1, dadurch gekennzeichnet, daß die Auflager der Cardangelenke in dem Cardan-Träger (4) und dem Cardanring (5) aus Löchern (43, 44, 50, 51, 52, 53) bestehen, die in die Schichten gebohrt und mit metallischen Hülsen (47, 48, 56, 57, 58, 59) aus Cuproberylliumlegierung ausgekleidet sind, das es ermöglicht, die durch die Achsen auf die Schichten ausgeübten Kräfte zu verteilen und die Scher-Schäden zwischen den aufgerollten Faserschichten zu vermeiden.

5. Gelenkkopf (3) nach Anspruch 1, mit einem Cardankopf (6) der durch einen Schwenkarm (7) verlängert ist, dadurch gekennzeichnet, daß der Cardanring (5) zwei Rillen (60, 61) aufweist, die seitlich an den Auslenkgrenzen des Schwenkarms (7) eingefräst sind, um den Schwenkwinkel dieses Schwenkarms (7) in Bezug auf den Cardanring (5) zu öffnen und seinen Auslenkbereich alleine durch die Öffnung des Cardanträgers (4) zu begrenzen.

6. Gelenkkopf (3) nach Anspruch 1, dadurch gekennzeichnet, daß er weiter ein Blockierstück (8) aufweist, das am Cardankopf (6) befestigt ist, einen Hohlraum umschließt, der ein Ankerteil (9) aufnimmt, das an einem Leitungskabel (2) befestigt ist, wobei in der inneren Wand dieses Hohlraums mindestens ein Raum (89, 90) für einen Antirotations-Anschlag (91, 92) vorgesehen ist, der über das Ankerstück (9) vorsteht.

7. Gelenkkopf (3) nach Anspruch 1, dadurch gekennzeichnet, daß er weiter ein Blockierteil (8) aufweist, das am Cardankopf (6) befestigt ist, mit einem Außenprofil in Form einer Folge von Zylindern, deren Durchmesser in Richtung auf das Leitungskabel (2) abnehmen, und das als Träger für eine dreiteilige Kautschukmuffe (80, 81, 82) dient, die einen progressiven Durchmesserübergang bewirkt.

8. Gelenkkopf (3) nach Anspruch 7, dadurch gekennzeichnet, daß das Blockierteil außen ein Gewinde (83) aufweist, das die Befestigung des Mittelteils (81) der Kautschukmuffe ermöglicht, die ihrerseits mit einem in den Kautschuk eingebetteten und mit Gewinde versehenen Metallring (84) versehen ist.

9. Gelenkkopf (3) nach Anspruch 8, dadurch gekennzeichnet, daß eines (80) der Endteile (80, 82) der Kautschukmuffe durch Blockierung mittels des Mittelteils (81) gegen Schultern (85, 86) der Außenwand des Blockierteils (8) und das andere (82) durch Verschachtelung im Mittelteil (81) befestigt ist.

10. Gelenkkopf (3) nach Anspruch 2, dadurch gekennzeichnet, daß der Raum einen zylindrischen Bereich aufweist, der sich zum Cardankopf (6) hin öffnet und der aufgesetzt und aufgeschraubt ist auf das Ende eines Schwingarms (7), der den Cardankopf (6) verlängert und der auf der dem Cardankopf (6) entgegengesetzten Ende in einem konischen Teil endet, das sich gemäß dem Profil eines Trichterhalses (87) mit ausgeweiteter Öffnung (88) verengt.

FIG.1

FIG.2

EP 0 268 210 B1